# EUROPEAN PATENT SPECIFICATION

(11) **EP 0 990 005 B1**
(45) Date of publication and mention of the grant of the patent: **08.12.2004**
(21) Application number: 98930331.8
(22) Date of filing: 22.06.1998
(51) Int. Cl.: C08F 210/16, C08F 8/00, C10M 107/02, C10M 171/04

(54) **ETHYLENE-ALPHA-OLEFIN POLYMERS, PROCESSES AND USES**
COPOLYMERE AUS ETHYLEN UND ALPHA-OLEFINEN,VERFAHREN UND VERWENDUNG DAVON
POLYMERES D'ETHYLENE-ALPHA-OLEFINE, LEURS PROCEDES DE FABRICATION ET LEURS UTILISATIONS

(30) Priority: 20.06.1997 US 880151
(43) Date of publication of application: 05.04.2000
(60) Divisional application: 04100327.8
(73) Proprietor: Pennzoil Quaker State Company, Houston, TX 77002 (US)
(72) Inventor: HEILMAN, William, Houston, TX 77079 (US); I-CHING, Chiu, Houston, TX 77031 (US); CHIEN, James, C., W., Amherst, MA 01002 (US)
(74) Representative: Zeestraten, Albertus Wilhelmus Joannes
(86) International application number: PCT/US1998/012621
(87) International publication number: WO 1998/058972

(56) References cited:
- EP-A- 0 021 634
- EP-A- 0 200 351
- EP-A- 0 332 243
- EP-A- 0 620 264
- WO-A-87/03610
- WO-A-95/33781
- DE-A- 1 939 037
- FR-A- 1 492 025
- GB-A- 1 033 456
- GB-A- 1 525 599
- US-A- 3 676 521
- US-A- 4 413 156
- US-A- 5 276 227
- US-A- 5 296 515

## Description

### Field of the Invention

This invention relates to ethylene-olefin polymers, processes for their production, and uses thereof as low molecular weight liquid, solid or wax-like products.

### Background of the Invention

Increasing demand in the oil industry has created a need for a high performance synthetic base oils with low volatility and high oxidative stability. Currently, poly-alpha-olefins (PAO) are used as synthetic base oils but costs are high. This has created a demand for a low cost alternative to PAO such as synthetic hydrocarbons with equivalent or better properties. The present invention is based, in part, on the surprising and unexpected discovery that synthetic base oils may be formulated directly into motor oils or fractionated into different viscosity grade oils with properties equivalent to commercial PAO.

Various prior art publications are available relating to poly-alpha-olefin polymers. Reference may be made to U.S. Patents 4,668,834, 4,542,199, 5,446,221, 4,704,491, 4,377,720, 4,463,201, 4,769,510, 4,404,344, 5,321,107, 5,151,204, 4,922,046, 4,794,096, 4,668,834, 4,507,515, and 5,324,800. Many of these prior art patents involve polymerization of ethylene or poly-alpha-olefins using a catalyst combination comprising a transition metal complex and an aluminoxane.

The present invention provides polymers of polyolefins which have a high viscosity index, low pour point, low cold cranking viscosity, high fire point and excellent oxidation stability.

### Summary of the Invention

It is accordingly an object of the present invention to provide a novel series of ethylene-olefin terpolymer compositions useful as base oils for the production of synthetic lubricating oils.

A further object of the present invention is to provide a process for the preparation of terpolymers of ethylene, an olefin and a third monomeric reactant, which terpolymers have unique characteristics as synthetic base oils.

An even further object of the present invention is to provide a series of novel polymeric products obtained by thermal cracking of the terpolymers of the invention and processes for the production therefor.

A still further object of the invention is to provide a series of polymeric produces which are the hydrogenated products of the thermal cracking procedure and processes for the production thereof.

A further object of the invention is to provide synthetic base oils for the production of synthetic lubricants.

A further object is to provide novel liquid and wax-like products for the cosmetic, textile, household, and personal care industries.

A further object of the invention is to provide solid and rubber-like plastics useful as sealants, thermoplastic elastomers, rubbers and moulded products.

Further objects and advantages of the present invention will become apparent as the description thereof proceeds.

In satisfaction of the foregoing objects and advantages, the present invention provides a process for the production of a terpolymer by reaction under polymerization conditions of ethylene, at least one olefin monomer different from ethylene, and at least one third monomer comprising an ethenically unsaturated hydrocarbon such as an olefin having a carbon chain length of greater than three, in the presence of a catalyst combination comprising a compound of a transition metal of Group IVb of the Periodic Table and an aluminoxane. Also provided is the novel terpolymer produced as a result of this process. This novel terpolymer may also be thermally cracked and hydrogenated, or hydroisomerized.

### Detailed Description of the Invention

The present invention relates in one embodiment to a process for producing an ethylene-olefin polymer, comprising the steps of: polymerizing ethylene and one or more olefin monomers having 3 to 20 carbon atoms in the presence of a catalyst combination comprising a compound of a transition metal of Group IVb of the Periodic Table, and an aluminoxane, and hydroisomerizing the obtained polymer.

By echylene-olefin polymer, there is meant a copolymer obtained by reaction of an ethylene monomer and one or more additional olefin monomers of suitable reactivity. The ethylene-olefin polymer may be, for example, a copolymer, a terpolymer, a terraoolymer, etc., depending on the number of monomers reacted in the process.

In one embodiment of the process of this invention, the starting material to be fed to the polymerization reaction system is a mixture of ethylene (ethene) and one or more olefins having 3 to 20 carbon atoms. The content of ethylene in the scarting material is preferably 2 to 80 mole%, preferably 4 to 55 mole%, and the content of the olefin is preferably 20 to 98 mole%, preferably 35 to 96 mole%.

Specific examples of the one or more olefins having 3 to 20 carbon atoms which may be used as a starting material in the process of this invention are 1-propene (propylene), 1-butene, 1-hexene, 4-methyl-1-pentene, 1-octene, 1-decene, 1-dodecene, 1-tetradecene, 1-hexadecene, 1-octadecene, 1-eicocene, styrene and α-methylstyrene, 2-methyl-1-butene, 2-methyl-1-hexene, 3-methyl-1-butene, 4-methyl-1-pentene, 2-methyl-1-pentene, 2-methyl-1-propene.

In an important embodiment of the invention, liquid terpolymers are provided. Generally, liquid terpolymers are produced when the amount of ethylene used in the polymerization reaction is less than 60 mole percent. However, liquid polymers may also be produced using higher amounts of ethylene if a comonomer is used which introduces longer side chains (e.g., C₆ and up) into the polymer.

In a further embodiment, semi-solid (low melting solids) and solid polymers are also provided. Such polymers are usually produced when the ethylene content is more than 75 mole percent. However, solid and semi-solid polymers can be produced when the ethylene content is higher than 75% depending on the other comonomers.

The catalyst combinations used in the polymerization processes of the present invention are well known as catalysts for such polymerization reactions. Such catalysts comprise preferably the combination of (a) metallocene compounds which are compounds of a transition metal of Group IVb of the Periodic Table and (b) an aluminoxane.

Such metallocene compounds are preferably tri- and tetravalent metals having one or two hapto η⁵-ligands selected from the group comprising cyclopentadienyl, indenyl, fluorenyl with the maximum number of hydrogen substituted with alkyl, alkenyl, aryl, alkylaryl, arylakyl or benzo radicals to none. When there are two η⁵-ligands, they may be the same or different which are either connected by bridging groups, selected from the group comprising, C₁-C₄ alkylene, R₂Si, R₄Si₂, R₂Si-O-Si-R₂, R₂Ge, R₂P, R₂N with R being hydrogen, alkyl or aryl radicals, or the two η⁵-ligands are not connected. The non-hapto ligands are either halogen or R, there are two or one such ligands for the tetravalency or trivalency transition metal, respectively. Where there is only one hapto η⁵-ligands, it can be selected from the group comprising cyclopentadienyl, indenyl, fluorenyl with from the maximum number of hydrogen substituted with R or benzo radicals or to none. The transition metal will have three or two non-hapto ligands in the +4 and +3 oxidation state, respectively. One hydrogen of the hapto ligand may be substituted with a heteratom moiety selected from the group NR, NR₂, PR, PR₂ which are connected by C₁-C₄ alklene, R₂Si, R₄Si₂ to the η⁵-ring. The appropriate number of non-hapto ligands is three for tetravalent metal in the case of coordinate bondings NR₂ or PR₂ moiety and one less non-hapto ligands for the trivalent metal. These numbers are decreased by one in the case of covalent bonding NR or PR moieties.

Illustrative but not limiting examples of titanium compounds comprise bis-(cyclopentadienyl) dimethyl-titanium, bis-(cyclopentadienyl) diisopropyltitanium, bis(cyclopentadienyl) dimethyltitanium, bis(cyclopentadienyl) methyltitanium monochloride, bis(cyclopenta-dienyl) ethyltitanium monochloride, bis(cyclopentadienyl) isopropyltitanium monochloride, bis(cyclopentadienyl) titanium dichloride, dimethylsilylene (1-η⁵-2,3,4,5-tetramethylpentadienyl) (t-butylamido) titanium dichloride, 2-dimethyl aminoethyl-η⁵-cyclopentadienyl titanium dichloride.

Illustrative but not limiting examples of zirconium compounds comprise as bis(isopropylcyclopentadienyl)-zirconium dichloride, bis(cyclopentadienyl)dimethylzirconium, bis(cyclopentadienyl)-diethylzirconium, bis-(methylcyclopenta-dienyl) diisopropylzirconium, bis(cyclopentadienyl) methylzirconium monochloride, bis-(cyclopentadienyl)ethylzirconium monochloride, bis(cyclopentadienyl)zirconium dichloride, rac-ethylene bis-(1-η⁵-indenyl) zirconium dichloride, rac-ethylene bis(1-η⁵-indenyl) zirconium dichloride, rac-ethylene bis(1-η⁵-4,5,6,7-tetrahydroindenyl) zirconium dichloride and isopropylidene-(1-η⁵-cyclopentadienyl) (9-η⁵-fluoronyl) zirconiumdichloride.

Specific examples of hafnium compounds comprise bis(cyclo-pentadienyl)dimethylhafnium, bis(cyclopentadienyl)methylhafnium monochloride, and bis(cyclopentadienyl)hafnium dichloride.

The aluminoxane co-catalyst useful in the catalysts of the present invention are polymeric aluminium compounds which can be represented by the general formulae (R-Al-O)ₙ which is a cyclic compound and R(R-Al-O-)ₙAlR₂, which is a linear compound. In the general formula R is a C₁-C₅ alkyl group such as, for example, methyl, ethyl, propyl, butyl and pentyl and n is an integer from 1 to 20. Most preferably, R is methyl and n is about 4. Generally, in the preparation of aluminoxanes from, for example, aluminium trimethyl and water, a mixture of the linear and cyclic compounds is obtained.

The proportion of the catalyst comprising a compound of a transition metal of Group IVb of the Periodic Table may be, for example, 10⁻³ to 10⁻² gram-atom/litre, preferably 10⁻⁷ to 10⁻³ gram-atom/litre, as the concentration of the catalyst comprising a compound of a transition metal in the polymerization reaction. The proportion of the aluminoxane used may be, for example, 10⁻⁴ to 10⁻¹ gram-atom/litre, preferably 10⁻³ to 5x10⁻² gram-atom/litre; as the concentration of the aluminium atom in the polymerization reaction. The ratlio of the aluminium atom to the transition metal in the polymerization reaction system may be, for example, in the range of 25 to 10⁶, preferably 50 to 10⁴. The molecular weight of the polymer may be controlled by using hydrogen, and/or by adjusting the polymerization temperature, or by changing the monomer concentrations.

The terpolymerizations could also be performed using other co-catalysts, without R₃Al (*Journal of Polymer Science: Part A: Polymer Chemistry*, Vol. 32, 2387-2393 (1994)).

While the above description represents preferred catalysts for use in the invention, equivalent catalysts and combinations may also be used to effect the olefin polymerization.

The polymerization reaction in the process of this invention may be carried out in absence of a solvent or in a hydrocarbon solvent. Examples of a hydrocarbon solvent suitable for this purpose are aliphatic hydrocarbons such as butane, isobutane, pentane, .hexane, octane, decane, dodecane, hexadecene and octadecane; alicyclic hydrocarbons such as cyclopentane, methylcyclopentane, cyclohexane and cyclooctane; aromatic hydrocarbons such as benzene, toluene and xylene; and petroleum fractions such as gasoline, kerosene, lubricant base stocks and light oils. The starting olefins may themselves serve as the hydrocarbon medium. Among these hydrocarbon media, the aromatic hydrocarbons and the starting olefins may be preferably used in the process of this invention.

The polymerization temperature in this first step of the process of the invention may range, for example, from 0°C to 200°C, preferably from 40°C to 120°C.

When the polymerization reaction in the process of this invention is carried out in the absence of hydrogen, a liquid copolymer having a high bromine value is obtained which contains unsaturation (double bonds). This copolymer is usually a high molecular weight copolymer. When the polymerization is carried out in the presence of hydrogen, a liquid polymer having a low bromine value or a bromine value of substantially zero may be obtained. Some unsaturation may be present. The hydrogen is used to control (lower) the molecular weight of the copolymer. Excess solvent may be removed by evaporation and a light copolymer (boiling point below 371°C (700°F) in ASTM D-2887 Simulated Distillation) is recovered by distillation under vacuum.

The product resulting from this copolymerization reaction of ethylene monomer and an olefin monomer different from ethylene is a copolymer suitable as a base oil for synthetic lubricants. The polymer may be characterized as containing from 50 to 75 mole % ethylene, having a number average molecular weight in excess of 1000, a molecular weight distribution in excess of 2, a bromine number in excess of 2, and a molecular structure which is head to tail with a random monomer distribution.

In a further aspect, the present invention provides vinylidene olefin polymers, copolymers, and terpolymers from vinylidene monomers alone or copolymerized with other non-vinylidene monomers. Vinylidene monomers are characterized by the formula:

CH₂=CR₁R₂

wherein R₁ and R₂ are independently selected from the group consisting of C₁-C₂₀ aliphatic groups, alicyclic groups and aromatic groups. Preferred vinylidene monomers are 2-methyl propene (isobutylene) and 4-methylepentene. Homopolymers of vinylidene monomers may be produced or a vinlidene monomer may be reacted with one or more comonomers which may be a second vinylidene monomer or an alpha-olefin. Suitable alpha-olefin comonomers comprise ethene, propene, styrene, ethylidene, norbornene, non-conjugated dienes, norbornene, and the like.

These vinylidene polymers are produced in generally the same manner and under the same conditions as the other polymers of the invention. However, it is preferred to use a tri-catalyst system comprising a catalytic amount of triisobutyl aluminium (TIBA), a TeCl catalyst, [(C₅Me₄) SiMe₂₋₃ N(T-Bu]TiCl₂, and a borate, triphenyl carbenium tetrakis (pentafluorophenyl) borate. The monomers are contacted with this catalyst system at a termperature ranging from 20°C to 40°C, a polymerization pressure of 34.5 to 172 kPa (5 to 25 psig) and a residence time of 0.5 to 2 hours, and preferably in the presence of hydrogen. Preferred ratios of reactants comprise olefin to vinylidene olefin ranging from 5-50 mole % olefins to 50-95 mole % vinylidene olefin, and optionally 0-2 percent hydrogen.

In the invention, a third monomeric reactant different from ethylene and the olefin polymer, may be included in the initial polymerization reaction to form a terpolymer product. This third component must contain unsaturation so that polymerization can occur and is selected from the group consisting of olefins having 4 to 20 carbon atoms.

Preferred reactants are olefins of 4 to 12 carbon atoms such as 1-butene, 1-pentene, 1-hexene, 1-heptene, 1-octene, 1-decene, 1-undecene and 1-dodecene, 2-methyl-1-pentene, styrene, ∝-methylstyrene, 2-methyl-1-butene, 3-methyl-1-butene, 4-methyl-1-pentene, 2-methyl-1-pentene, 2-methyl-1-propene.

In conducting the reaction with the third monomeric reactant, it is preferred to use 0.1 up to 40 mole percent, preferably 1 to 20 mole percent of the third monomer, based on the total composition.

The terpolymer produced in this embodiment of the invention may be characterized as a liquid terpolymer of ethylene, a first olefin different from ethylene, and a second olefin different from ethylene and the first olefin, preferably having 4 to 20 carbon atoms; and characterized by:
(a) mole % ethylene of from 10 to 80%;
(b) mole % of said first olefin of from 14 to 80%;
(c) mole % of said second olefin of from 1% to 10%;
(d) number average molecular weight of 300-10,000;
(e) molecular weight distribution of < 2.5; and a
(f) bromine number in the range of 0 to 53.

The terpolymer resulting from reaction using the third monomer reactant is also useful as a synthetic base oil for synthetic lubricants and as a white oil for use in cosmetics and medicines. The third monomer provides a beneficial effect by lowering the pour point of the final base oil.

The presence of the third monomer during the polymerization reaction may require a change in catalyst or polymerization reaction conditions. Obviously, other and additional different monomers may be included in the reaction to produce tetrapolymers, etc.

In a further embodiment of the invention, the intermediate terpolymer resulting from the polymerization reaction, is subjected to cracking, preferably thermal cracking. As noted above, once the polymerization reaction is completed, excess solvent is removed and those polymers having boiling points below 371°C (700°F) in ASTM D-2887 Simulated Distillation are recovered by distillation. The catalyst may be washed from the copolymer or terpolymer with an aqueous base (e.g., 1M NaOH) or acid (e.g., 1M HCl). The resulting terpolymer product is then subjected to cracking, preferably under thermal conditions but catalytic cracking could be used as is known in the art. The thermal cracking process is carried at a temperature range of from 250°C to 550°C, preferably from 350°C to 450°C.

The pressure in the cracking step of the invention may range, for example, from 13.3 to 4000 Pa (0.1 to 30 mm Hg) vacuum pressure, preferably from 26.6 to 1333 Pa (0.2 to 10 mm Hg) vacuum pressure.

The cracked product in liquid form may optionally be washed with an aqueous base or aqueous acid, and water. Preferably, the cracked feed is washed with aqueous 1M NaOH, followed by large quantities of water.

As a result of the thermal cracking process, there is produced a terpolymer or segments thereof which contain unsaturation (double bonds). The thermally cracked polymeric product is also useful as a synthetic base oil for synthetic lubricants.

The cracked liquid terpolymer may be described as a liquid terpolymer of ethylene, a first olefin, and a second olefin having 3 to 20 carbon atoms; said terpolymer being characterized by:
(a) mole % ethylene of from 10 to 80%;
(b) mole % of said first olefin of from 14 to 80%;
(c) mole % of said second olefin of from 1% to 10%;
(d) number average molecular weight of 300-10,000;
(e) molecular weight distribution of < 2.5; and a
(f) bromine number in the range of 0 to 53.

In the thermal cracking process, the polymer appears to crack or separate substantially in the center of the polymer. These are narrow molecular weight range products particularly useful as 2x10⁻⁶, 4x10⁻⁶ and 6x10⁻⁶ m²/s (2, 4 and 6 centistoke) oils. For example, in a polymer having a number average molecular weight of about 1200, the resulting cracked products will have two segments of about 600 number average molecular weight each. Also, after cracking, the segments will not exclusively exhibit vinylidene unsaturation but rather will have allyl unsaturates and some internal double bonds.

The bromine number of .a preferred hydrogenated cracked hydrocarbon product will range from 0 up to 1.0, the kinematic viscosity at 100°C will range from 2x10⁻⁶ to 16x10⁻⁶ m²/s (2 to 16 cSt), the viscosity index will range from 140 to 160, and the pour point will be below 0°C.

In a further embodiment, the cracked product is then hydrogenated by reaction with hydrogen gas in the presence of a catalytic amount (0.1 to 5 wt.%) of a catalyst. Examples of suitable hydrogenating catalysts are metals of Group VIII of the Periodic Table such as iron, cobalt, nickel, rhodium, palladium and platinum. These catalysts are deposited on alumina, on silica gel, or on activated carbon in preferred embodiments. Of these catalysts, palladium and nickel are preferred. Palladium on activated carbon and nickel on kieselguhr are especially preferred. The hydrogenation reaction is carried out in the presence or absence of solvents. Solvents are necessary only to increase the volume. Examples of suitable solvents are hydrocarbons such as pentane, hexane, heptane, octane, decane, cyclohexane, methycyclohexane and cyclooctane aromatic hydrocarbons such as toluene, xylene or benzene. The temperature of the hydrogenation reaction may range, for example, from 150°C to 500°C, preferably from 250° to 350°C. The hydrogenation reaction pressure may be, for example, in the range of 1.72 - 6.89 mPa (250-1000 psig) hydrogen. The hydrogenated polymeric product is then recovered by conventional procedures. In the hydrogenated product, the double bonds formed in the cracking step have been hydrogenated so that the polymer is a separate type of product. The hydrogenated product will have a number average molecular weight ranging from 300 to 1000 and a kinematic viscosity @ 100°C of 6x10⁻⁶ to 16x10⁻⁶ m²/s (6-16 centistokes).

In a further embodiment of the present invention, the resulting ethylene-olefin polymer or terpolymer can be hydroisomerized in the presence of a catalytic amount (0.1 to 5 wt.%) of an acidic hydroisomerization catalyst. The hydroisomerization temperature used in this process ranges from 250°C to 550°C, preferably from 150°C to 300°C.

The pressure in the hydroisomerization process may range, for example, from 1.72-6.89 mPa (250 to 1000 psig) hydrogen pressure, preferably from 2.07 to 3.45 mPa (300 to 500 psig) hydrogen pressure. In the resulting hydroisomerized product, the carbon moieties have been rearranged into a different molecular structure.

Examples of the acidic hydroisomerization catalysts include transition metals of Groups VI to VIII of the Periodic Table, their oxides, or the combination of metal and metal oxide supported on acidic molecular sieves. The metals include Pd, Ni, Pt, Mo. Metal oxides include PdO, NiO, MoO₃. Molecular sieves include synthetic zeolites, such as zeolite A, L, X, Y, and natural zeolites, such as mordentie, chabazite, eriomite, and clinoptilolite. Preferred hydroisomerization catalysts include Pd supported on acidic zeolite X, Ni/MoO₃ on zeolite and Ni/NiO on zeolite.

The polymer products of the invention are useful as synthetic lubricating base oils. The base oils of the invention are comparable or improved in lubricating properties, but are less expensive to produce, than poly-alpha-olefins which are currently used commercially as synthetic lubricants.

The synthetic base oils of the invention may be formulated with from about 0.1% up to about 5 wt. % of one or more conventional lubricating oil additives. Such additives comprise detergent packages, pour point depressants, viscosity index improvers and other additives such as anti-oxidants, additives with a detergent action, viscosity increasing compounds, anti-corrosives, anti-foaming agents, agents to improve the lubricating effect and other compounds which are usually added to lubricating oils.

The following examples 8-22 and 27-31 are presented to further illustrate the invention but are not considered to limit the scope of the invention in any manner whatsoever.

### EXAMPLE 1

### Preparation of ethylene-propylene polymer

A 4-liter autoclave reactor (using two 2-liter autoclave reactors connected in series) was thoroughly purged with nitrogen and was charged with 300 ml of dried toluene (dried over potassium). Ethylene, propylene and hydrogen were simultaneously and continuously fed through a mass flow controller into the bottom of the reactor at a ratio of 2000 cm³/min, 1900 cm³/min, and 240 cm³/min, respectively. Methylaluminoxane 1.5 mg-atom/hour based on Al content in toluene solution and bis(isopropyl-cyclopentadienyl)zirconium dichloride 15x10⁻³ mg-atom/hour based on Zr content in toluene solution were simultaneously and continuously pumped into the reactor. The ethylene and propylene were polymerized at 50°C and 103.4 kPa (15 psig) pressure. Throughout the reaction run, the temperature was maintained at +/-2°C by a heat transfer fluid being circulated through a coil tubing inside the reactor. The excess monomers and hydrogen were continuously vented out at 11.33 x 10⁻³ m³ (0.4 cubic feet) per hour to maintain a constant gas concentration in the reactor.

The resulting polymer solution was continuously transferred from the reactor to a collection vessel. The pressure was controlled by a back-pressure valve 1.02 atm (15 psig). The product, along with toluene, was withdrawn from the collector, and the toluene was removed on a rota-evaporator. The product was washed with aqueous 1M NaOH, followed by washing with a large quantity of water. A clear liquid polymer (245 grams per hour) was obtained. The obtained liquid polymer had a kinematic viscosity of 40x10⁻⁶m²/s (40 cSt) at 100°C and viscosity index of 173, Mn of 1400, Mw/Mn of 2.44, bromine number of 4.7. The obtained copolymer contained 62 mole % ethylene.

### EXAMPLE 2

The procedure was essentially the same as Example 1, except the polymerization conditions and the feed ratio of ethylene/propylene were changed. The results and properties of the product are summarized in Table 1.

**TABLE 1**

| **Polymerization conditions and products properties** | | |
|---|---|---|
| Example | 1 | 2 |
| Reactor Vol., L | 4 | 2 |
| Propylene, cm³/min | 1990 | 2000 |
| Ethylene, cm³/min | 2000 | 1400 |
| Hydrogen, cm³/min | 240 | 20 |
| MAO, Al mg-atom /h | 1.5 | 1.5 |
| (i-PrCp)₂ZrCl₂, Zr mg-atom/h | 1.5x10⁻³ | 1.5x10⁻³ |
| Polymerization Temperature, °C | 50 | 90 |
| Polymerization Pressure, kPa (psig) | 103 (15) | 206 (30) |
| Mn | 1400 | 1300 |
| Mw/Mn | 2.37 | 2.41 |
| Ethylene mole % in Copolymer | 62 | 63 |
| Yield, grams/hour | 245 | 153 |
| Simulated Distillation % off at 371 °C (700°F) | 10 | 8.6 |
| Kinematic Viscosity @ 100°C, m²/s (cSt) | 40x10⁻⁶ (40) | 33x10⁻⁶ (33) |
| Viscosity Index | 173 | 176 |
| Bromine Number | 4.7 | 8.5 |

### EXAMPLE 3

### Thermal Cracking

The light polymers produced in Example 1 (boiling point below 371°C (700°F) in ASTM D-2887 Simulated Distillation) were distilled under vacuum. The remaining viscous oils (500 grams) were placed in a round-bottom flask connected to a short-path distillation column and a receiver. The contents were heated at 350° to 450°C at 26.7 to 267 Pa (0.2 to 2 mm Hg) vacuum pressure. The liquid polymers were thermally cracked inside the flask. Once the polymer pyrolized, the cracked polymers were simultaneously evaporated at this temperature range under reduced pressure, and condensed in the receiver to give 420 grams of clear oil. About 15 grams of polymer were left in the flask with the remaining catalysts. The condensed cracked product was characterized by Mn, 797; Mw/Mn, 1.34; kinematic viscosity at 100°C, 7.29 x 10⁻⁶ m²/s (7.29 cSt); VI, 160; bromine number, 18.9.

### EXAMPLE 4

### Hydrogenation

### Method A

A portion of the cracked product from Example 1 and 1 weight percent of Pd/C powder were placed in a Zipperclave reactor and filled with 3.45 kPa (500 psig) hydrogen. After agitation for 7 hours at 250°C, the reactor was cooled at room temperature. The catalyst was filtered through celite under reduced pressure to give a clear colourless liquid oil having a bromine number of less than 0.1. C-13 NMR: peak at δ 11.4 ppm. proves the presence of iso-butyl groups.

### Method B

A stainless steel column 1.27 cm x 0.61 m(1/2 in x 2 feet)was filled with 45.9 grams of Ni-Kieselguhr pellets. A portion of the cracked oils from Example 2 were continuously pumped upward at a rate of 1.5 ml/min. through the column at 350°C (inside temperature) and 5.17 kPa (750 psig) hydrogen. The hydrogen also flowed upward through the column from a separate line. The hydrogenated products were collected at the other end of column to give a clear colourless liquid oil having a bromine number of less than 0.1. The C-13 NMR: peak at δ 11.4 ppm. proves the presence of iso-butyl groups.

### EXAMPLE 5

### Hydroisomerization

### Method A

Hydroisomerization on a portion of the cracked product of Example 1 was performed in the same equipment using the same procedure as described in Method B of Example 4, except the Ni-Kieselguhr catalyst was replaced by 32 grams of Pd supported acidic molecular sieve (an x-type zeolite). The Pd supported zeolite was prepared by the treatment of molecular sieve X13 (50 grams) with NH₄Cl (13 grams) and Pd(NH₃)₂Cl₂(1 gram) in aqueous solution at 90°C. After the separation of the water, the treated zeolite was then calcined at 450°C for 4 hours. The hydroisomerization was carried out at 280°C and 2.41 kPa (350 psig) of hydrogen pressure. The hydroisomerized product is a clear colourless liquid having a bromine number of <0.1; C-13 NMR showed the characteristic internal ethyl group at δ 10.9 ppm and the characteristic terminal ethyl group at δ 11.4 ppm. High resolution C-13 NMR also revealed that there are at least six different methyl-carbon signals at 14.16, 14.21, 14.42, 14.45, 14.58, and 14.63 ppm.

### Method B

Method A was repeated on a portion of the cracked product of Example 1 but using the commercially available Pd supported zeolite. There was obtained an isomerized colourless liquid having a bromine number of <0.1.

### EXAMPLE 6

The hydrogenated cracked oil obtained in Example 4 was formulated by the addition of commercial additives into a 5W30 grade motor oil. The formulation and the resulting physical properties are shown in Table II and compared with a commercial synthetic 5W-30 oil made from poly-alpha-olefins. In Table II, DI is a detergent inhibitor package and a VI improver is a viscosity index improver.

**TABLE II**

| | **5W30 From Example 4** | **Commercial Synthetic 5W - 30** |
|---|---|---|
| Components | Wt % | Wt % |
| Synthetic Basestock - Example 4 | 71.29 | 0 |
| Synthetic Ester | 11.39 | 12.06 |
| PAO 8 | 0 | 39.17 |
| PAO 4 | 0 | 30.79 |
| DI Package | 11.40 | 11.56 |
| VI Improver | 5.82 | 6.32 |
| Pour Point Depressant | 0.1 | 0.1 |

| **Physical Properties** | | |
|---|---|---|
| Kinematic Viscosity @ 100°C | 11.6x10⁻⁶ m²/s (11.6 cSt) | 11.3x10⁻⁶ m²/s (11.3 cSt) |
| Kinematic Viscosity @ 40°C | 64.5x10⁻⁶ m²/s (64.5 cSt) | 65.3x10⁻⁶ m²/s (65.3 cSt) |
| Viscosity index | 177 | 166 |
| Cold Cranking Simulator, -25 °C | 2.63 Pas (2628 cP) | 2.49 Pas (2486 cP) |
| Minirotary Viscometer TP-1 @-30°C | 6.6 Pas (6600 cP) | 5.4 Pas (5400 cP) |
| Minirotary Viscometer TP-1 Y.S. @-30°C | 0 | 0 |
| Scanning Brookfield Viscosity at 30,000 cP | -39.9°C | <-40°C |
| Pour Point, °C | -54°C | <-57°C |
| Simulated Distillation, % off at 371°C (700°F) | 10.90% | 2.60% |
| Noack | 11.89% | N.D. |
| 4-Ball Wear Scar, mm | 0.37 | 0.38 |
| Friction Coefficient @ 100°C | 0.11 | 0.11 |

The data in Table II shows that the motor oil formed from the base oil of Example 4 is comparable in characteristics and performance to the more expensive synthetic PAO oil.

### EXAMPLE 7

The hydrogenated cracked oil obtained in Example 4 was further fractionated into 2x10⁻⁶ m²/s, 4x10⁻⁶ m²/s and 6x10⁻⁶ m²/s (2 cSt, 4 cSt and 6 cSt) base oils. Their physical properties are shown in Table III.

**TABLE III**

| **Property** | 2x10⁻⁶ m²/s (2 cSt) Oil | 4x10⁻⁶ m²/s (4 cSt) Oil | 6x10⁻⁶ m²/s (6 cSt) Oil |
|---|---|---|---|
| Viscosity, m²/s (cSt) | | | |
| 100°C | 1.9x10⁻⁶ (1.9) | 4.05x10⁻⁶ (4.05) | 6.1x10⁻⁶ (6.1) |
| 40°C | 5.98x10⁻⁶ (5.98) | 17.3x10⁻⁶ (17.3) | 31.6x10⁻⁶ (31.6) |
| Viscosity Index | 106 | 137 | 145 |
| Cold Cranking Simulator, -25°C | N.D. | 670 | 1930 |
| Pour Point, °C | <-60 | -27 | -27 |
| Flash Point, °C | 146 | 207 | 246 |
| Fire Point, °C | N.D. | 259 | 282 |
| Sp. Gr. | 0.797 | 0.815 | 0.823 |
| Bromine Number | <0.1 | <0.1 | <0.1 |
| GPC, Mn | 326 | 606 | 761 |
| GPC, Mw/Mn | 1.07 | 1.05 | 1.15 |
| NOACK, wt% | 99.6 | 15.2 | 7.1 |
| Simulated | 96.5 | 0 | 1.2 |
| Distillation, | | | |
| % off at 371 °C(700°F) | | | |
| 1% | 561 | 730 | 694 |
| 5% | 577 | 752 | 747 |
| 10% | 592 | 761 | 786 |
| 20% | 604 | 775 | 838 |
| 50% | 637 | 804 | 883 |
| 90% | 680 | 820 | 927 |
| 95% | 693 | 853 | 972 |
| 99% | 730 | 869 | 1101 |

| PDSC Oxidation | | | |
|---|---|---|---|
| Test 34 atm O₂ (500 psig O₂) | 20 | 18.4 | 18.8 |
| Base oil. @ 165°C, minutes | 25.8 | 49.9 | 50.1 |
| Containing 10% DI, @ 195°C, min | | | |

### EXAMPLE 8

### Ethylene/Propylene/1-Butene Terpolymer

This experiment was carried out in a similar manner as Example 1, except that the reaction was a batch reaction. A 1-liter autoclave reactor was thoroughly purged with nitrogen and then charged with 300 ml of dried toluene. Through the mass flow controller, ethylene, propylene, 1-butene and hydrogen were fed into the reactor at a ratio of 4000 cm³/min, 3600 cm³/min, 400 cm³/min, and 400 cm³/min, respectively. Methyl aluminoxane in toluene solution, 46.9 mg-atom, as aluminium atom, and 0.015 mg-atom, as Zr atom, of bis(isopropylcyclopentadienyl) zirconium dichloride in toluene solutions were injected at 50°C and 103 kPa (15 psig) pressure. After 3 hours, the reaction was quenched with 1% aq. HCl, then washed with aqueous 1 M NaOH, followed by a large quantity of water. After stripping off toluene, the reaction gave 348 grams of liquid terpolymer. The polymerization conditions and physical properties of the reactor product are summarized in Table IV. The crude reactor product was thermally cracked as described in Example 3, followed by distilling off the light polymer through a Vigreux column. The residue was hydrogenated with 1 wt% of 10% Pd on active carbon. The final hydrogenated liquid terpolymer had a kinematic viscosity at 100°C of 9.6x10⁻⁶ m²/s (9.6 cSt) and viscosity index of 158; Mn of 1006, Mw/Mn of 1.24. The composition of the terpolymer, determined by C-13 NMR, was 72 mole % of ethylene, 25 mole % of propylene, and 3 mole % of butene. The physical properties are summarized in Table V.

### EXAMPLE 9

The liquid terpolymer was prepared in the same manner as in Example 8, except that the reactor was fed ethylene, propylene, 1-butene and hydrogen at a rate of 4000 cm³/min, 3980 cm³/min, 995 cm³/min, and 540 cm³/min, respectively. The polymerization conditions and physical properties of the product are summarized in Table IV.

The reactor product was cracked and hydrogenated in the same manner as in Example 8 to give a colourless liquid of kinematic viscosity at 100°C of 9.9x10⁻⁶ m²/s (9.9 cSt) and viscosity index of 150. The composition and the physical properties of terpolymer are summarized in Table V.

### EXAMPLE 10

### Ethylene/Propylene/1-Decene Terpolymer

The liquid terpolymer was prepared in the same manner as Example 8, except that into the reactor was injected 25 mL of 1-decene and ethylene, propylene, and hydrogen at a rate of 4000 cm³/min, 3980 cm³/min, and 480 cm³/min, respectively. The reaction ran for 3 hours and gave 444 grams of liquid terpolymer. The polymerization conditions and physical properties of the product are summarized in Table IV.

The reactor product was cracked and hydrogenated in the same manner as Examples 3 and 4 to give a colourless liquid having a kinematic viscosity at 100°C of 9.8x10⁻⁶ m²/s (9.8 cSt) and viscosity index of 159. The terpolymer contained 4.2% by weight of 1-decene. The physical properties, summarized in Table V, show the terpolymer has a better (lower) pour point than the copolymer in comparative Example A.

### Comparative Example A

The same procedure as Example 10 was followed, except the polymerization was conducted without adding a third olefin. The physical properties of the reactor product and the final hydrogenated cracked liquid terpolymer are outlined in Tables IV and V.

### EXAMPLE 11

### Ethylene/Propylene/1-Hexene Terpolymer

Ethylene, propylene, and hydrogen were mixed in ratio of 47:53.3:5.2 in a 7 L cylinder to a total pressure of 725 kPa (105.2 psig). The temperature of the cylinder was heated to and maintained at 50°C for at least 2 hours to mix the gases. Into a 0.5 L autoclave reactor was placed 100 ml of toluene, followed by the gas mixture at 50°C, 103 kPa (15 psig) pressure. Two ml of 1-hexene, dried over 4A molecular sieves, was injected into the reactor, followed by the injection of 15 mg-atom, as aluminium atom, of methyl aluminoxane and 0.015 mg-atom, as zirconium atom, of Bis(i-propylcyclopentadienyl) zirconium dichloride in toluene solution. After 3 hours, the polymerization product was quenched with 1% HCl/MeOH, washed with 100 ml 0.5 M aq.NaOH, then water. The solvent was rota-evaporated to give 156 grams of liquid terpolymer. The terpolymer contained 0.9% 1-hexane by weight.

The crude reactor product was cracked in the same manner as described in Example 3. A heart cut of terpolymer was collected overhead at a temperature of 150°C to 275°C at 200 Pa (1.5 mm Hg) vaduum.. The product, 114 grams (82%), was hydrogenated with 1 wt.% of Pd/C as described in Example 4 to give a colourless liquid polymer. The physical properties of the final hydrogenated liquid terpolymer are outlined in Table VI.

### EXAMPLE 12

Example 11 was repeated, except that 4 ml 1-hexene was injected as the third monomer. The physical properties of the final hydrogenated liquid terpolymer are outlined in Table VI.

### EXAMPLE 13

Example 11 was repeated, except that 20 ml 1-hexene was injected as the third monomer. The physical properties of the final hydrogenated liquid terpolymer are outlined in Table VI.

### Comparative Example B

For comparison, the ethylene/propylene copolymer was prepared without adding 1-hexene using the same procedure as described in Example 11. The physical properties of the final hydrogenated liquid copolymer are outlined in Table VI.

**TABLE IV**

| **Conditions and Properties of the Reactor Products** | | | | |
|---|---|---|---|---|
| **Experiment** | **Comparative Ex. A** | **8** | **9** | **10** |
| Reactor Volume | 1 L | 1 L | 1 L | 1 L |
| Solvent, ml | 300 | 300 | 300 | 300 |
| T, °C | 50 | 50 | 50 | 50 |
| Pressure, kPa (psig) | 103 (15) | 103 (15) | 103 (15) | 103 (15) |

| Feed: Monomers | | | | |
|---|---|---|---|---|
| Ethylene, cm³/min | 4000 | 4000 | 4000 | 4000 |
| Propylene, cm³/min | 3980 | 3600 | 3980 | 3980 |
| 1-Butene, cm³/min | 0 | 400 | 995 | 0 |
| 1-Decene, ml | 0 | 0 | 0 | 25 |
| Hydrogen, cm³/min | 480 | 400 | 540 | 480 |
| Catalysts | | | | |
| MAO, AI mg-atom | 31.3 | 46.9 | 62.6 | 31.3 |
| (i-PrCp)₂ZrCl₂, Zr mg-atom/h | 0.01 | 0.015 | 0.02 | 0.01 |
| Time, hours | 3 | 3 | 3 | 3 |
| Yield, grams | 311 | 348 | 394 | 444 |
| Kin. Vis., at 100°C m²/s (cSt) | 113x10⁻⁶ (113) | 86x10⁻⁶ (86) | 53x10⁻⁶ (53) | 43x10⁻⁶ (43) |
| Kin. Vis., at 40°C m²/s (cSt) | 1101x10⁻⁶ (1101) | 897x10⁻⁶ (897) | 496x10⁻⁶ (496) | 302x10⁻⁶ (302) |
| Viscosity Index | 202 | 181 | 172 | 200 |
| C₂, mole % in polymer | 72 | 71.5 | 67 | N/A |
| C₃, mole % in polymer | 28 | 25.4 | 27 | N/A |
| C₄, mole % in polymer | 0 | 3 | 6 | 0 |
| Mn | 2196 | 2339 | 1784 | 2129 |
| Mw/Mn | 2.27 | 2 | 2.14 | 2.02 |
| Bromine Number | 2.8 | 2.1 | 2.5 | 22 |
| Sim. Dist. % off at 371°C (700°F) | 3.8 | 4.3 | 6.4 | 6.5 |

**TABLE V**

| **Physical Properties of the Hydrogenated Liquid Terpolymer** | | | | |
|---|---|---|---|---|
| **Experiment** | **Comparative Ex. A** | **8** | **9** | **10** |
| Feed: Monomers | | | | |
| Ethylene, cm³/min | 4000 | 4000 | 4000 | 4000 |
| Propylene, cm³/min | 3980 | 3600 | 3980 | 3980 |
| 1-Butene, cm³/min | 0 | 400 | 995 | 0 |
| 1-Decene, ml | 0 | 0 | 0 | 25 |
| Hydrogen, cm³/min | 480 | 400 | 540 | 480 |
| Mole % of C₂ | 72 | 72 | 67 | N.D. |
| Mole % of C₃ | 28 | 25 | 27 | N.D. |
| Mole % of C₄ | 0 | 3 | 6 | 0 |
| Wt % of C₁₀ | | | | 4.2 |

| Kinematic Viscosity | | | | |
|---|---|---|---|---|
| at 100°C, m²/s (cSt) | 11.4x10⁻⁶ (11.4) | 9.6x10⁻⁶ (9.6) | 9.9x10⁻⁶ (9.9) | 9.8x10⁻⁶ (9.8) |
| at 40° C, m²/s (cSt) | 66.1x10⁻⁶ (66.1) | 55.8x10⁻⁶ (55.8) | 60.3x10⁻⁶ (60.3) | 56.5x10⁻⁶ (56.5) |
| Viscosity Index | 166 | 158 | 150 | 159 |
| Pour Point, °C | -3 | -12 | -24 | -12 |
| Simulated Dist., % off @ 371°C (700°F) | 3.6 | 2.2 | 5.1 | 3.1 |
| Mn | 1086 | 1006 | 1001 | 1028 |
| Mw/Mn | 1.34 | 1.24 | 1.31 | 1.25 |
| Bromine Number | 0.1 | 0.1 | 0.1 | 0.1 |

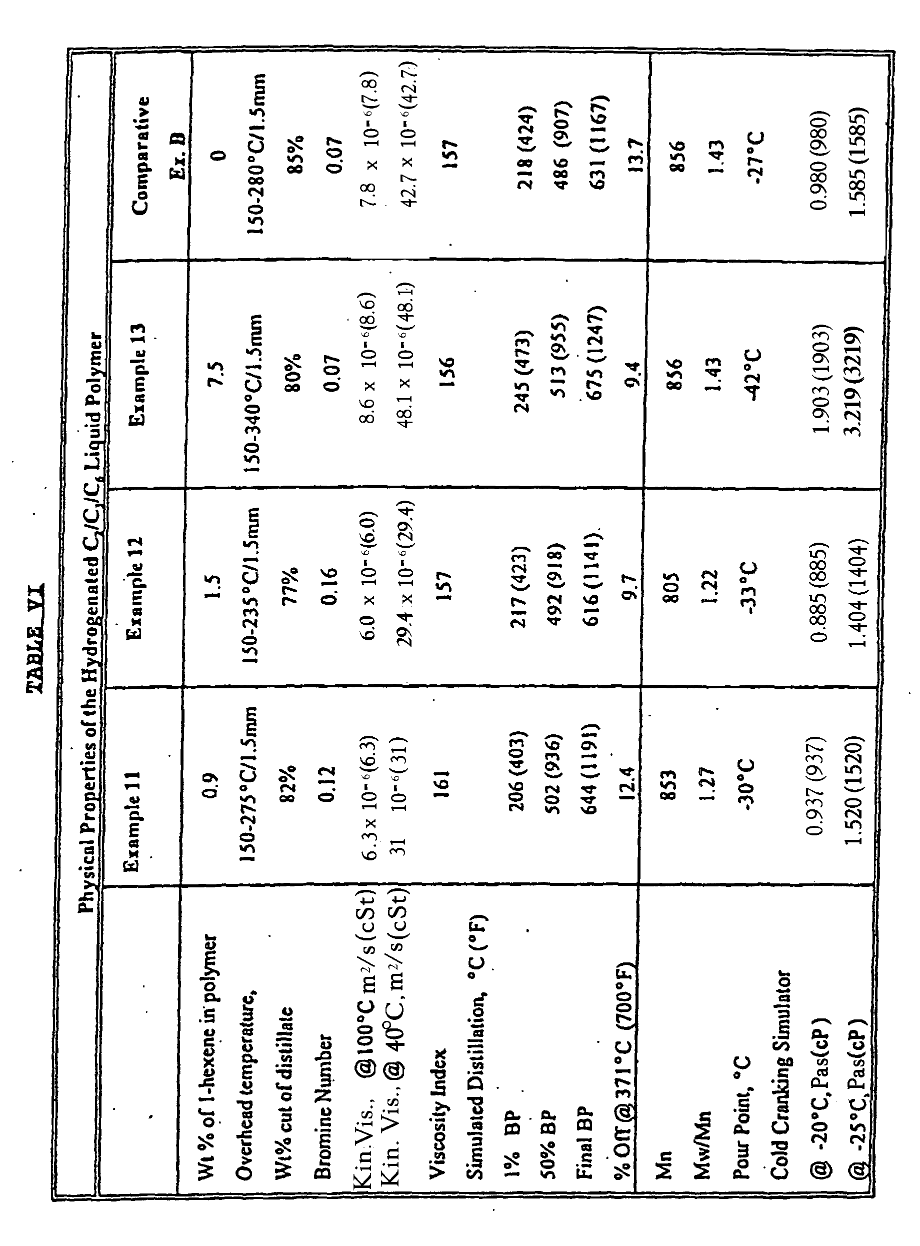

### EXAMPLES 14-17

### Ethylene/Propylene/1-Butene Terpolymer

These examples were carried out in a manner similar to Example 8, except that the feed rates of the monomers were as set forth below in Table VII. Also set forth in Table VII are physical and chemical characteristics of the terpolymers produced.

**TABLE VII**

| **Example** | **14** | **15** | **16** | **17** |
|---|---|---|---|---|
| **Feed** | | | | |
| Ethylene, ml/min | 3600 | 3880 | 4000 | 4000 |
| Propylene, ml/min | 4000 | 4000 | 3000 | 3200 |
| 1-Butene, ml/min | 200 | 200 | 1000 | 800 |
| Hydrogen ml/min | 312 | 240 | 480 | 600 |

| **Products** | | | | |
|---|---|---|---|---|
| **Composition** | | | | |
| Ethylene, % mole | 65.2 | 69.7 | 73.6 | 73.5 |
| Propylene, % mole | 33.2 | 28.9 | 19.9 | 21.3 |
| Butene,% mole | 1.4 | 1.3 | 6.4 | 5.1 |
| Pour Point, °C | -33 | -21 | -9 | -6 |
| Mn | 2477 | 2694 | 2547 | 2055 |
| Mw/Mn | 2.12 | 2.23 | 2.01 | 2.16 |
| Bromine Number | 2.3 | 3.2 | 1.3 | 1.0 |
| Kin. Vis. at 100°C, m²/s (cSt) | 107x10⁻⁶ (107) | 188x10⁻⁶ (188) | 10.6x10⁻⁶ (106) | 70.4x10⁻⁶ (70.4) |
| at 40°C, m²/s (cSt) | 1.14x10⁻³ (1140) | 2.286x10⁻³ (2286) | 1.096x10⁻³ (1096) | 625x10⁻⁶ (625) |
| Viscosity Index | 189 | 204 | 193 | 191 |
| % Unsaturation | 35.6 | 53.9 | 20.7 | 12.8 |

### Example 18

A 1-liter autoclave reactor was thoroughly purged with nitrogen and then charged with 200 ml of toluene. Through mass flow controller, ethylene, propylene, 1-butene and hydrogen were fed into the reactor at a ratio of 4000 ml/min, 312 ml/min, 135 ml/min, and 89 ml/min, respectively. The molar ration of ethylene/propylene/1-butene were 90/7/3. Methyl aluminoxane in toluene solution, 30 mg-atom, as aluminium atom, and 0.03 mg-atom, as Zr atom, of bis(cyclopentadienyl)zirconium dichloride in toluene solution were injected at 50°C, 206.8 kPa (30 psig) pressure. After 1 hour, the reactor was dismounted. The solid polymer was washed in a blender with 5% aq.HCl. The solid polymer was filtered, re-washed with water. The filtered solid was then oven dried overnight at 50°C/1.33 kPa (10 mm Hg). Total 233 grams of a white powder was obtained. Drop melting point 103.8°C; DSC melting point, 103°C.

### Example 19

The solid terpolymer was prepared in the same manner as in Example 18, except that the feeds contain no hydrogen. Total 181 grams of white solid was obtained. Capillary melting point, 91-111°C.

### Example 20

The solid terpolymer was prepared in the same manner as in Example 18, except that the reactor pressure was maintained at 345 kPa (50 psig); and the reaction was run for 2 hours. Total 423 grams of white fine solid was obtained. Drop melting point, 105°C.

### Example 21

The semi-solid terpolymer was prepared in the same manner as in Example 18, except that ethylene, propylene, 1-butene and hydrogen were fed into the reactor at a ratio of 4000 ml/min, 1176 ml/min, 160 ml/min, and 107 ml/min, respectively. The molar ratio of ethylene/propylene/1-butene were 75/22/3. The reaction was run for 2 hours. AFter worked up, 563 grams of white semi-slid was obtained. Drop melting point 64.5°C; Brookfield viscosity (Spindle TF at 5 RPM; 21°C), 387 Pas (387,000 cP).

### Example 22

A rubber semi-solid terpolymer was prepared in the same manner as in Example 21, except that the feeds contain no hydrogen. The reaction was run for 2 hours. After worked up, 303 grams of a rubber semi-slid was obtained. Drop melting point, 103.3°C.

### EXAMPLE 23

### Preparation of ethylene-isobutene copolymer

At 250 ml pressure reaction bottle with a magnetic stir bar was thoroughly purged with argon and was charged with 50 ml of dried toluene (distilled over potassium). Ethylene, isobutene and hydrogen were premixed in a 7 Liter cylinder at a ratio of 8%, 82%, and 10%, respectively, and then heated at 70°C overnight. The gas mixture was fed into the reaction bottle at 25°C under a pressure of 69 kPa (10 psig). Then 1.5 ml of 0.05 M triisobutylaluminium (TIBA) in toluene solution was injected into the bottle with a syringe followed by 1 ml of 3.75 x 10⁻³ M Dow Insite® catalyst ([(C₅Me₄)SiMe₂₋₃N(t-Bu)]TiCl₂, Me = methyl) in toluene solution and finally 1 ml of 3.75 x 10⁻¹ M triphenylcarbenium tetrakis(pentafluorophenyl)borate (Ph₃CB(C₆F₅)₄) in toluene solution as cocatalyst. Polymerization of ethylene and isobutene was initiated upon injection of cocatalyst solution. Throughout the reaction run, the temperature was maintained by a constant temperature bath with a circulator. The excess monomers and hydrogen were continuously vented at a rate of about 10 ml/min to maintain a constant gas concentration in the reaction bottle.

After one hour the reaction was quenched by injecting 10 ml of 2% acidic methanol into the bottle and the resulted solution was stirred for an extra hour. The product, along with toluene, was then washed with 3 x 200 ml of deionized water in a 500 ml separatory funnel, the organic layer was filtered through celite to get a clear solution. toluene was subsequently removed into a rota-evaporator to obtain an opaque, viscous liquid. Activity of the polymerization was 1.97 x 10 ⁵ g of polymer/(mol Ti-hr). Quantitative ¹³C NMR analysis of the liquid showed an ethylene-isobutene copolymer was formed and it contained 46% of ethylene.

### EXAMPLE 24

The procedure was essentially the same as Example 23, except that polymerization conditions and the feed ratio of ethylene/isobutene were changed and the gas phase of the reaction system was nonvented. The polymerization conditions are summarized in Table VIII. Waxy solid material was obtained from the polymerization and ¹³C NMR analysis of the solid showed formation of ethylene-isobutene copolymer.

**TABLE VIII**

| Polymerization conditions | | |
|---|---|---|
| Example | 23 | 24 |
| Ethylene in feed, % | 8 | 9 |
| Isobutene in feed, % | 82 | 91 |
| Hydrogen in feed, % | 10 | 0 |
| Polymerization Temperature, °C | 25 | 25 |
| Polymerization Pressure, kPa (psig) | 69 (10) | 69 (10) |
| Polymerization Time, hr. | 1 | 1 |
| Toluene, ml. | 50 | 50 |
| TIBA | 1.5 ml of 0.05M | 1.5 ml of 0.05M |
| Insite® catalyst | 1 ml of 3.75 x 10⁻³M | 2 ml of 7.5 x 10⁻³M |
| Ph₃CB(C₆F₅)₄ | 1 ml of 3.75 x 10⁻³M | 2 ml of 7.5 x 10⁻³M |
| Activity, g of polymer/(mol Ti - hr) | 1.97 x 10⁵ | 2.4 x 10⁵ |

### EXAMPLE 25

### Preparation of propylene-isobutene copolymer

The procedure was essentially the same as Example 23. A propylene, isobutene and hydrogen gas mixture at a ratio of 9%, 82%, and 9%, respectively, was fed into the reaction bottle containing 50 ml of toluene at 60°C under a pressure of 138 kPa (20 psig). 2 ml of 0.05 M TIBA , 4 ml of 15 x 10⁻³ M Insite® catalyst and 4 ml of 15 x 10⁻³ M Ph₃CB(C₆F₅)₄ solutions were used to initiate polymerization. The gas phase of the reaction system was continuously vented at a rate of about 20 ml/min. After one hour of reaction, a clear liquid was obtained with an activity of 0.73 x 10 ⁵ g of polymer/(mol Ti - hr). The liquid has M_{w} of 3,316 and M_{w}/Mₙ of 3.00. ¹³C NMR analysis of the liquid showed formation of propylene-isobutene copolymer.

### EXAMPLE 26

The procedure was essentially the same as Example 25 except a monomer gas mixture at a ratio of 26%, 65%, and 9% for propylene, isobutene and hydrogen, respectively, was fed into the reaction bottle and 3 ml of 0.05 M TIBA was used to initiate polymerization. one hour of reaction a clear liquid was obtained with an activity of 0.53 x 10⁵ g of polymer/(mol Ti - hr.). ¹³C NMR analysis of the liquid showed formation of propylene-isobutene copolymer.

### EXAMPLE 27

### Preparation of ethylene-propylene-isobutene terpolymer

The procedure was essentially the same as Example 23. An ethylene, propylene, isobutene and hydrogen gas mixture at a ratio of 9%, 4%, 78% and 9%, respectively, was fed into the reaction bottle containing 50 ml of toluene at 40°C under a pressure of 138 kPa (20 psig). 2 ml of 0.05 M TIBA, 2 ml of 3.75 x 10⁻³ M Insite® catalyst under 2 ml of 3.75 x 10⁻³ M Ph₃CB(C₆F₅)₄ solutions were used to initiate polymerization. The gas phase of the reaction system was continuously vented at a rate of about 20 ml/min. After one hour of reaction a clear liquid was obtained with an activity of 4.89 x 10⁵ g of polymer/mol Ti - hr). ¹³C NMR analysis of the liquid showed formation of ethylene-propylene-isobutene terpolymer.

### EXAMPLE 28

The procedure was essentially the same as Example 27 except for the monomer gas mixture was at a ratio of 13.4%, 18%, 55.2% and 13.4% for ethylene, propylene, isobutene and hydrogen, respectively. After one hour of reaction a clear liquid was obtained with an activity of 3.47 x 10⁵ g of polymer/(mol Ti - rr). ¹³C NMR analysis of the liquid showed formation of ethylene-propylene-isobutene terpolymer.

### EXAMPLE 29

### Preparation of ethylene-styrene-isobutene terpolymer

The procedure was similar to that in Example 23. The reaction bottle was charged with 50 ml of dried toluene and 10 ml of styrene. 69kPa (10 psig) of a gas mixture at a ratio of 10% and 90% for ethylene and isobutene, respectively, was fed into the bottle at 50°C. 3 ml of 0.05 M TIBA, 4 ml of 0.015 M Insite® catalyst and 4 ml of 0.015 M Ph₃CB(C₆F₅)₄ solutions were used to initiate polymerization. The gas phase of the reaction system was continuously vented at a rate of about 10 ml/min. After one hour of reaction a semi-solid was obtained with an activity of 2.42 x 10⁵ g of polymer/(mol Ti - hr). The product has M_{w} of 3,127 and M_{w}/Mₙ of 3.06. DSC study of the material indicated an ethylene-styrene-isobutene terpolymer was formed.

### EXAMPLE 30

The procedure was similar to example 29. 10 psig of a gas mixture at a ratio of 10% and 90% for ethylene and isobutene, respectively, was fed into the bottle containing with 1.04 x 10⁻⁴ mole of (C₅Me₅)TiCl₃ and 10 ml of a α-methylstyrene at 25°C. 3 ml of 0.05 M TIBA and 5 ml of 0.028 M Ph₃CB(C₆F₄)₄ solutions were used to initiate polymerization. The gas phase of the reaction system was continuously vented at a rate of about 10 ml/min. AFter one hour of reaction solid product was obtained with an activity of 0.24 x 10 ⁵ g of polymer/(mol Ti - hr). DSC study of the material indicated an ethylene-α-methylstyrene-isobutene terpolymer was formed.

### EXAMPLE 31

The procedure was essentially the same as Example 30 except for 1.04 x 10⁻⁴ mole of Insite® catalyst instead of (C₅Me₅)TiCl₃ was used as a catalyst for polymerization. one hour of reaction solid product was obtained with an activity of 0.41 x 10⁵ g of polymer/(mol Ti - hr). DSC study of the material indicated an ethylene-α-methylstyrene-isobutene terpolymer was formed.

In addition to their use as base oils, the products of the invention are also useful in applications such as air care, skin care, hair care, cosmetics, household products, cleaners, polishes, fabric care, textile coatings and textile lubricants,automotive products, car cleaners and polishes, fuel additives, oil additives, candles, pharmaceuticals, suspending agents, sun care, insecticides, gels, hydraulic fluids, transmission fluids, modifier for polymers, biodegradable applications and 2-cycle oils.

The invention has been described with reference to certain preferred embodiments. However, as obvious variations thereon will become apparent to those skilled in the art, the invention is not to be considered as limited thereto.

## Claims

1. A terpolymer comprising ethylene, a first olefin different from ethylene, and a second olefin having 3 to 20 carbon atoms and different from said first olefin; said terpolymer being **characterized by**:
(a) mol% of ethylene from 10 to 80 %;
(b) mol % of said first olefin from 14 to 80 %;
(c) mol% of said second olefin from 1 % to 10 %;
(d) number average molecular weight of 300 to 10,000;
(e) molecular weight distribution of <2.5;
(f) random monomer distribution; and
(g) a head-to-tail molecular structure.

2. A terpolymer comprising ethylene, a first olefin different from ethylene, and a second olefin having 3 to 20 carbon atoms and different from said first olefin; said terpolymer being **characterized by**:
(a) mol% of ethylene from 10 to 80 %;
(b) mol% of said first olefin from 14 to 80 %;
(c) mol% of said second olefin from 1 % to 10 %; and
(d) number average molecular weight 300 to 10,000,
wherein the terpolymer is obtained in the presence of a single-site catalyst comprising a compound of a transition metal of Group IVb of the Periodic Table and an aluminoxane.

3. A cracked liquid terpolymer of ethylene, a first olefin different from ethylene, and a second olefin having 4 to 20 carbon atoms and different from said first olefin; said terpolymer being **characterized by**:
(a) mol% of ethylene from 10 to 80 %;
(b) mol% of said first olefin from 14 to 80 %;
(c) mol% of said second olefin from 1 % to 10 %;
(d) number average molecular weight of <2000;
(e) molecular weight distribution of <2; and
(f) random monomer distribution.

4. A terpolymer according to any of the preceding claims, wherein said first olefin is propylene.

5. A terpolymer according to any of the preceding claims, wherein said second olefin is a C₄ to C₁₂ olefin.

6. A terpolymer according to claim 5, wherein said second olefin is 1-butene, 1-pentene, 1-hexene, 1-heptene, 1-octene, 1-nonene, 1-decene, or styrene.

7. A terpolymer according to claim 1 or 2, wherein said terpolymer has a bromine number ranging from 0 to 25, a number average molecular weight of from 1000 to 3000, a molecular weight distribution of 1.0 to 2.5, and a kinematic viscosity at 40°C of 50x10⁻⁶ - 5x10⁻³ m²/s (50 to 5000 cSt).

8. A terpolymer according to any of the preceding claims, wherein the terpolymer includes ethylene, propylene, and 1-butene.

9. A terpolymer according to any of claims 1 to 3, wherein said first olefin is 2-methylpropene, 2-methyl-1-butene, 2-methyl-1-pentene, 2-methyl-1-hexene, or alphamethylstyrene.

10. A terpolymer according to any of the preceding claims, wherein said terpolymer is liquid.

11. A terpolymer according to any of claims 1 to 9, wherein said terpolymer is wax-like.

12. A terpolymer according to any of claims 1 to 9, wherein said terpolymer is solid.

13. A process for the production of a terpolymer comprising the steps of:
polymerizing ethylene and a first olefin having from 3-20 carbon atoms and a second olefin different from the first olefin and having 4-20 carbon atoms in the presence of a single-site catalyst comprising a compound of a transition metal of group IVb of the Periodic Table and an aluminoxane to produce said terpolymer.

14. A process according to claim 13, which comprises the additional step of hydrogenating said terpolymer to produce a hydrogenated terpolymer.

15. A process according to claim 14, wherein said hydrogenation is carried out by reaction of the terpolymer with hydrogen gas in the presence of a hydrogenation catalyst, a temperature of 150°C to 500°C, and a pressure of 1.72-6.89 mPa (17-68 atm) hydrogen.

16. The hydrogenated terpolymer produced according to the process of claim 14 or 15.

17. A process according to claim 13, further comprising the additional step of cracking said terpolymer to produce a cracked terpolymer.

18. A process according to claim 17, further comprising the additional step of hydrogenating the cracked terpolymer to produce a hydrogenated cracked terpolymer.

19. A process to claim 18, wherein the hydrogenation is carried out by reaction of the cracked terpolymer with hydrogen gas in the presence of a hydrogenation catalyst, a temperature of 150°C to 500°C, and a pressure of 1.72-6.89 mPa (17-68 atm) hydrogen.

20. The hydrogenated cracked terpolymer produced according to the process of the claim 18 or 19, wherein the bromine number ranges from 0.04 to 1.5.

21. A lubricant oil comprising a polymer of Claim 1, Claim 2, Claim 3, Claim 16 or Claim 20 as the base oil and an effective amount of at least one oil additive.

## Patentansprüche

1. Ein Terpolymer, das Ethylen, ein erstes, von Ethylen verschiedenes Olefin und ein zweites Olefin umfaßt, das 3 bis 20 Kohlenstoffatome aufweist und von dem ersten Olefin. verschieden ist; welches Terpolymer **gekennzeichnet ist durch**:
(a) 10 bis 80 Mol% Ethylen;
(b) 14 bis 80 Mol% an dem ersten Olefin;
(c) 1 bis 10 Mol% an dem zweiten Olefin;
(d) ein zahlenmittleres Molekulargewicht von 300 bis 10.000;
(e) eine Molekulargewichtsverteilung von <2,5;
(f) eine statistische Monomerverteilung; und
(g) eine Kopf-Schwanz-Molekularstruktur.

2. Ein Terpolymer, das Ethylen, ein erstes, von Ethylen verschiedenes Olefin und ein zweites Olefin umfaßt, das 3 bis 20 Kohlenstoffatome aufweist und von dem ersten Olefin verschieden ist; welches Terpolymer **gekennzeichnet ist durch**:
(a) 10 bis 80 Mol% Ethylen;
(b) 14 bis 80 Mol% an dem ersten Olefin;
(c) 1 bis 10 Mol% an dem zweiten Olefin; und
(d) ein zahlenmittleres Molekulargewicht von 300 bis 10.000,
worin das Terpolymer in Gegenwart eines Einzelstellenkatalysators erhalten wird, der eine Verbindung eines Übergangsmetalles aus der Gruppe IVb des Periodensystems und ein Aluminoxan umfaßt.

3. Ein gecracktes flüssiges Terpolymer aus Ethylen, einem ersten, von Ethylen verschiedenen Olefin und einem zweiten Olefin, das 4 bis 20 Kohlenstoffatome aufweist und von dem ersten Olefin verschieden ist; welches Terpolymer **gekennzeichnet ist durch**:
(a) 10 bis 80 Mol% Ethylen;
(b) 14 bis 80 Mol% an dem ersten Olefin;
(c) 1 bis 10 Mol% an dem zweiten Olefin;
(d) ein zahlenmittleres Molekulargewicht von <2000;
(e) eine Molekulargewichtsverteilung von <2; und
(f) eine statistische Monomerverteilung.

4. Terpolymer nach einem der vorstehenden Ansprüche, worin das erste Olefin Propylen ist.

5. Terpolymer nach einem der vorstehenden Ansprüche, worin das zweite Olefin ein C₄-C₁₂-Olefin ist.

6. Terpolymer nach Anspruch 5, worin das zweite Olefin 1-Buten, 1-Penten, 1-Hexen, 1-Hepten, 1-Octen, 1-Nonen, 1-Decen oder Styrol ist.

7. Terpolymer nach Anspruch 1 oder 2, worin das Terpolymer eine Bromzahl im Bereich von 0 bis 25, ein zahlenmittleres Molekulargewicht von 1000 bis 3000, eine Molekulargewichtsverteilung von 1,0 bis 2,5 und eine kinematische Viskosität bei 40°C von 50x10⁻⁶ bis 5x10⁻³ m²/s (50 bis 5000 cSt) aufweist.

8. Terpolymer nach einem der vorstehenden Ansprüche, worin das Terpolymer Ethylen, Propylen und 1-Buten enthält.

9. Terpolymer nach einem der Ansprüche 1 bis 3, worin das erste Olefin 2-Methylpropen, 2-Methyl-1-buten, 2-Methyl-1-penten, 2-Methyl-1-hexen oder alpha-Methylstyrol ist.

10. Terpolymer nach einem der vorstehenden Ansprüche, worin das Terpolymer flüssig ist.

11. Terpolymer nach einem der Ansprüche 1 bis 9, worin das Terpolymer wachsähnlich ist.

12. Terpolymer nach einem der Ansprüche 1 bis 9, worin das Terpolymer fest ist.

13. Verfahren zur Herstellung eines Terpolymers, umfassend die Schritte des
Polymerisierens von Ethylen und einem ersten Olefin mit 3-20 Kohlenstoffatomen und einem zweiten, von dem ersten Olefin verschiedenen Olefin mit 4-20 Kohlenstoffatomen in Gegenwart eines Einstellenkatalysators, der eine Verbindung eines Übergangsmetalles aus der Gruppe IVb des Periodensystems und ein Aluminoxan umfaßt, um das Terpolymer auszubilden.

14. Verfahren nach Anspruch 13, das den zusätzlichen Schritt des Hydrierens des Terpolymers zur Ausbildung eines hydrierten Terpolymers umfaßt.

15. Verfahren nach Anspruch 14, worin die Hydrierung durch Umsetzen des Terpolymers mit Wasserstoffgas in Gegenwart eines Hydrierkatalysators bei einer Temperatur von 150°C bis 500°C und bei einem Druck von 1,72 - 6,89 mPa (17-68 atm) Wasserstoff ausgeführt wird.

16. Das hydrierte Terpolymer, hergestellt nach dem Verfahren von Anspruch 14 oder 15.

17. Verfahren nach Anspruch 13, das den zusätzlichen Schritt des Crackens des Terpolymers zur Ausbildung eines gecrackten Terpolymers umfaßt.

18. Verfahren nach Anspruch 17, das den zusätzlichen Schritt des Hydrierens des gecrackten Terpolymers zur Ausbildung eines hydrierten gecrackten Terpolymers umfaßt.

19. Verfahren nach Anspruch 18, worin die Hydrierung durch Umsetzen des gecrackten Terpolymers mit Wasserstoffgas in Gegenwart eines Hydrierkatalysators bei einer Temperatur von 150°C bis 500°C und bei einem Druck von 1,72 - 6,89 mPa (17-68 atm) Wasserstoff ausgeführt wird.

20. Das hydrierte gecrackte Terpolymer, hergestellt nach dem Verfahren von Anspruch 18 oder 19, worin die Bromzahl von 0,04 bis 1,5 beträgt.

21. Ein Schmieröl, umfassend ein Polymer nach Anspruch 1, Anspruch 2, Anspruch 3, Anspruch 16 oder Anspruch 20 als das Grundöl und eine wirksame Menge wenigstens eines Öladditivs.

## Revendications

1. Terpolymère comprenant de l'éthylène, une première oléfine différente de l'éthylène, et une seconde oléfine comportant 3 à 20 atomes de carbone et différente de la première oléfine; le terpolymère précité étant **caractérisé par** :
(a) un % molaire d'éthylène allant de 10 à 80%;
(b) un % molaire de la première oléfine précitée allant de 14 à 80%;
(c) un % molaire de la seconde oléfine précitée allant de 1% à 10%;
(d) un poids moléculaire moyen numérique de 300 à 10.000;
(e) une distribution de poids moléculaires de <2,5;
(f) une distribution de monomères randomisée; et
(g) une structure moléculaire tête contre queue.

2. Terpolymère comprenant de l'éthylène, une première oléfine différente de l'éthylène, et une seconde oléfine comportant 3 à 20 atomes de carbone et différente de la première oléfine; le terpolymère précité étant **caractérisé par** :
(a) un % molaire d'éthylène allant de 10 à 80%;
(b) un % molaire de la première oléfine précitée allant de 14 à 80%;
(c) un % molaire de la seconde oléfine précitée allant de 1% à 10%; et
(d) un poids moléculaire moyen numérique de 300 à 10.000,
dans lequel le terpolymère est obtenu en présence d'un catalyseur à un seul site comprenant un composé d'un métal de transition du Groupe IVb du Tableau Périodique et un aluminoxane.

3. Terpolymère liquide craqué d'éthylène, d'une première oléfine différente de l'éthylène, et d'une seconde oléfine comportant 4 à 20 atomes de carbone et différente de la première oléfine; le terpolymère précité étant **caractérisé par** :
(a) un % molaire d'éthylène allant de 10 à 80%;
(b) un % molaire de la première oléfine précitée allant de 14 à 80%;
(c) un % molaire de la seconde oléfine précitée allant de 1% à 10%;
(d) un poids moléculaire moyen numérique de <2000;
(e) une distribution de poids moléculaires de <2; et
(f) une distribution de monomères randomisée.

4. Terpolymère suivant l'une quelconque des revendications précédentes, dans lequel la première oléfine précitée est du propylène.

5. Terpolymère suivant l'une quelconque des revendications précédentes, dans lequel la seconde oléfine précitée est une oléfine en C₄ à C₁₂.

6. Terpolymère suivant la revendication 5, dans lequel la seconde oléfine précitée est du 1-butène, du 1-pentène, du 1-hexène, du 1-heptène, du 1-octène, du 1-nonène, du 1-décène ou du styrène.

7. Terpolymère suivant l'une ou l'autre des revendications 1 et 2, dans lequel le terpolymère précité a un indice de brome allant de 0 à 25, un poids moléculaire moyen numérique allant de 1000 à 3000, une distribution de poids moléculaires de 1,0 à 2,5, et une viscosité cinématique à 40°C de 50 x 10⁻⁶ à 5 x 10⁻³ m²/s (50 à 5000 cSt).

8. Terpolymère suivant l'une quelconque des revendications précédentes, dans lequel le terpolymère comprend de l'éthylène, du propylène et du 1-butène.

9. Terpolymère suivant l'une quelconque des revendications 1 à 3, dans lequel la première oléfine précitée est du 2-méthyl-propène, du 2-méthyl-1-butène, du 2-méthyl-1-pentène, du 2-méthyl-1-hexène ou de l'alpha-méthylstyrène.

10. Terpolymère suivant l'une quelconque des revendications précédentes, dans lequel ledit terpolymère est liquide.

11. Terpolymère suivant l'une quelconque des revendications 1 à 9, dans lequel ledit terpolymère est du type cire.

12. Terpolymère suivant l'une quelconque des revendications 1 à 9, dans lequel ledit terpolymère est solide.

13. Procédé de production d'un terpolymère comprenant les étapes :
de polymérisation d'éthylène et d'une première oléfine comportant de 3-20 atomes de carbone et d'une seconde oléfine différente de la première oléfine et comportant 4-20 atomes de carbone en présence d'un catalyseur à un seul site comprenant un composé d'un métal de transition du Groupe IVb du Tableau Périodique et un aluminoxane pour produire le terpolymère précité.

14. Procédé suivant la revendication 13, qui comprend l'étape additionnelle d'hydrogénation du terpolymère précité pour produire un terpolymère hydrogéné.

15. Procédé suivant la revendication 14, dans lequel l'hydrogénation précitée est réalisée par la réaction du terpolymère avec du gaz d'hydrogène en présence d'un catalyseur d'hydrogénation, d'une température de 150°C à 500°C et d'une pression de 1,72-6,89 mPa (17-68 atmosphères) d'hydrogène.

16. Terpolymère hydrogéné produit par le procédé suivant l'une ou l'autre des revendications 14 et 15.

17. Procédé suivant la revendication 13, comprenant de plus l'étape additionnelle de craquage du terpolymère précité pour produire un terpolymère craqué.

18. Procédé suivant la revendication 17, comprenant de plus l'étape additionnelle d'hydrogénation du terpolymère craqué pour produire un terpolymère craqué hydrogéné.

19. Procédé suivant la revendication 18, dans lequel l'hydrogénation est réalisée par la réaction du terpolymère craqué avec du gaz d'hydrogène en présence d'un catalyseur d'hydrogénation, d'une température de 150°C à 500°C et d'une pression de 1,72-6,89 mPa (17-68 atmosphères) d'hydrogène.

20. Terpolymère craqué hydrogéné produit par le procédé suivant l'une ou l'autre des revendications 18 et 19, dans lequel l'indice de brome va de 0,04 à 1,5.

21. Huile lubrifiante comprenant un polymère suivant la revendication 1, la revendication 2, la revendication 3, la revendication 16 ou la revendication 20 comme huile de base et une quantité efficace d'au moins un additif pour huile.
